# EUROPÄISCHE PATENTSCHRIFT

(11) **EP 0 957 051 B1**
(45) Veröffentlichungstag und Bekanntmachung des Hinweises auf die Patenterteilung: **11.08.2004**
(21) Anmeldenummer: 99109649.6
(22) Anmeldetag: 11.05.1999
(51) Int. Cl.: B65G 54/02

(54) **Lineare Transporteinrichtung für Werkstückträger**
Linear conveyor for article supporting means
Convoyeur linéaire pour support d'articles

(30) Priorität: 15.05.1998 DE 19821908
(43) Veröffentlichungstag der Anmeldung: 17.11.1999
(73) Patentinhaber: Rohwedder Microtech GmbH & Co. KG, 76646 Bruchsal (DE)
(72) Erfinder: Lange, Udo, 76646 Bruchsal (DE); Müller, Lothar, 69124 Heidelberg (DE)
(74) Vertreter: Dimmerling, Heinz, Dipl.-Ing.

(56) Entgegenhaltungen:
- WO-A-96/27544
- FR-A- 1 599 841

## Beschreibung

Die Erfindung bezieht sich auf eine lineare Transporteinrichtung für Werkstückträger in einer Transportstrecke, wobei entlang der Transportstrecke zumindest ein Primärteil eines Linearmotors verläuft und wobei Sekundärteile des Linearmotors dem Werkstückträger zugeordnet sind( WO 96 27 544 A).

Es ist üblich, derartige Transporteinrichtungen so auszubilden, daß die Werkstückträger einzeln transportiert und positioniert werden können. Dies erfordert einen hohen Steuerungs- und Zentrieraufwand.

Der Erfindung liegt die Aufgabe zugrunde, den Herstellungs-, Steuerungs- und Positionieraufwand der Transporteinrichtung zu verringern.

Diese Aufgabe wird durch die Erfindung gemäß Anspruch 1 gelöst. Eine derartige Transportstrecke eignet sich insbesondere für Transportstrecken, bei denen der Transporthub gleich der Länge des Werkstückträgers ist. Entlang der Transportlänge angeordnete Bearbeitungsstationen können in ihrem Mittelabstand auf die einfache oder mehrfache Länge des Werkstückträgers abgestimmt sein und nehmen so stets eine günstige Lage zu diesen ein. Durch die hohe Genauigkeit der Anschlaglänge der Werkstückträger kann erreicht werden, daß die Werkstückträger nur an einer Stelle der Transportstrecke in ihrer Lage überwacht und zentriert werden müssen und daß dann die einzelnen in der Transportstrecke geführten Werkstückträger ebenfalls eine definierte Lage einnehmen.

Die permanentmagnetischen Sekundärteile sind so ausgebildet, daß sich ihre Magnetisierungsrichtung in der Transportrichtung erstreckt, so daß sich bei zwei aufeinanderfolgenden Werkstückträgern jeweils ein Nord- und Südpol gegenüberliegen und die Werkstückträger magnetisch zusammengehalten werden. Die Gesamtheit der Werkstückträger wirkt hier also wie eine Magnetschiene eines Linearmotors. Das Primärteil ist sämtlichen Werkstückträgern gemeinsam und wird im Ganzen angesteuert, wodurch sich der Regelaufwand noch weiter verringert.

Vorteilhafte Weiterbildungen der Erfindung sind in den Ansprüchen 2 bis 5 gekennzeichnet.

Durch die an die angepaßten Teilungsabstände nach werden die magnetischen Antriebs- und Brems- und Haltekräfte maximal wirksam. Die Anzahl der Pole kann auf die maximale Anzahl der Werkstückträger verringert werden. Dies ist insbesondere dann von Vorteil, wenn die Hublänge der Transportstrecke gleich der Länge eines der Werkstückträger ist.

Durch die Weiterbildung nach Anspruch 2 ist es möglich, die quer zur Transportrichtung wirksamen Magnetkräfte auszugleichen, so daß eine Führungsbahn für die Werkstückträger nur wenig belastet wird.

Durch die Weiterbildung nach Anspruch 3 werden die Magnetteile der Hublänge angepaßt.

Durch die Weiterbildung nach Anspruch 4, ist es möglich, eine optische Abtasteinrichtung auf eine der Anschlagflächen zu richten, die eine genaue Referenzfläche darstellt.

Durch die Weiterbildung nach Anspruch 5 kann die Gesamtlänge der aneinanderliegenden Werkstückträger ermittelt und überwacht werden.

Im folgenden wird die Erfindung anhand eines in der Zeichnung dargestellten Ausführungsbeispieles näher erläutert.
- Figur 1: zeigt einen Querschnitt durch eine Transporteinrichtung für Werkstückträger entlang der Linie I-I in Figur 2.
- Figur 2: eine Draufsicht auf die Transporteinrichtung nach Figur 1.

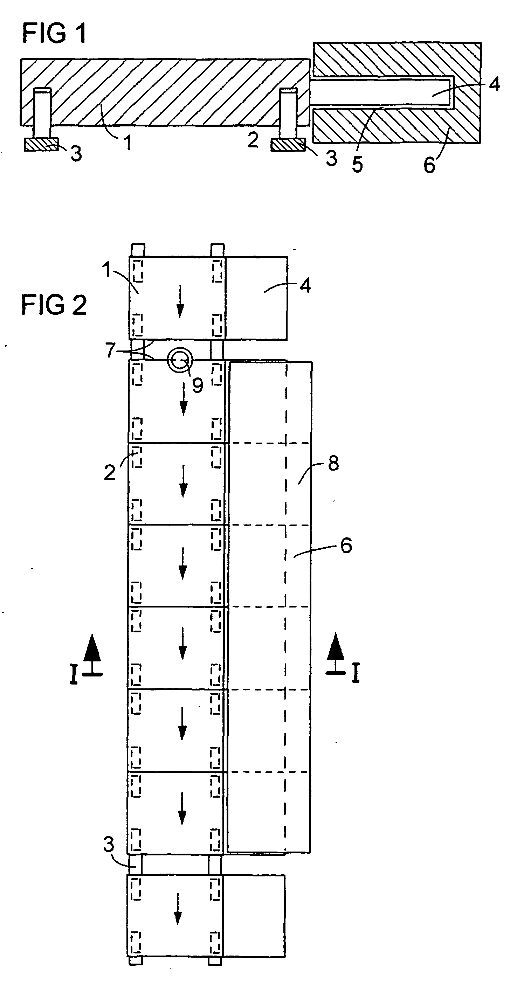

Nach den Figuren 1 und 2 sind plattenartige Werkstückträger 1 von rechteckiger Erstreckung auf ihrer Unterseite mit Rädern 2 versehen, die in einer Linearen Transportbahn 3 geführt sind. An den Werkstückträger 1 ist seitlich ein plattenförmiges Magnetteil 4 angesetzt, daß in einen Magnetspalt 5 eines Spulenteils 6 hineinragt. Die Magnetteile 5 und das Spulenteil 6 bilden einen Linearmotor, bei dem die Magnetteile 4 als Sekundärteil und das Spulenteil 6 als Primärteil dienen.

Das ortsfeste Spulenteil 6 erstreckt sich entlang der Transportbahn 3. Die in der Transportrichtung quer stehenden Stirnseiten der Werkstückträger 1 dienen als gegenseitige Anschlagflächen 7, die die Länge des Werkstückträgers 1 definieren. Diese Länge ist bei allen für die Transporteinrichtung vorgesehenen Werkstückträgern 1 in engen Toleranzgrenzen identisch. Im Bereich des Spulenteiles 6 sind die Werkstückträger 1 lückenlos aneinandergereiht und können somit bei der gleichbleibenden Magnetteilung im Hinblick auf den Vorschub wie ein einziges Sekundärteil behandelt werden. In gleicher Weise sind Sektionen des Spulenteiles 6 in ihrem Abstand auf die Länge der Werkstückträger abgestimmt. Auch das Spulenteil kann hier wie ein einziges Primärteil angesteuert und betrieben werden.

Am Anfang der Transportstrecke ist eine optische Abtasteinrichtung 9 angeordnet, die die Lage der rückwärtigen Stirnseite des Werkstückträgers 1 detektiert. Bei einer Abweichung von der vorgegebenen Lage können die Werkstückträger 1 entsprechend verfahren werden.

## Patentansprüche

1. Lineare Transporteinrichtung für Werkstückträger (1) in einer Transportstrecke (z.B. 3), wobei entlang der Transportstrecke zumindest ein Spulenteil (6) als Primärteil eines Linearmotors verläuft und wobei Magnetteile (4) als Secondärteil des Linearmotors dem Werkstückträger (1) zugeordnet sind,
**dadurch gekennzeichnet,**
**daß** die Werkstückträger (1) frontseitige und rückseitige Anschlagflächen (7) für die jeweils benachbarten Werkstückträger (1) aufweisen,
**daß** der Längsabstand zwischen der frontseitigen und der rückseitigen Anschlagfläche (7) mit enger Toleranz einem Nennmaß angeglichen ist,
**daß** die in der Transportrichtung aufeinanderfolgenden Werkstückträger (1) unmittelbar an den wechselseitigen Anschlagflächen (7) aneinander liegen,
**daß** das Primärteil im Ganzen ansteuerbar ist und
**daß** die Teilungsabstände zwischen Sektionen (8) des Spulenteils (6) in ihrer Länge auf den Längsabstand zwischen den Anschlagflächen (7) abgestimmt sind.

2. Transporteinrichtung nach Anspruch 1,
**dadurch gekennzeichnet,**
**daß** die plattenartig von den Werkstückträgern (1) abstehenden Magnetteile (4) in einen Magnetspalt (5) des Spulenteiles (6) hineinragen.

3. Transporteinrichtung nach Anspruch 1 oder 2,
**dadurch gekennzeichnet,**
**daß** die Länge der Magnetteile (4) annähernd gleich der Länge der Werkstückträger (1) ist.

4. Transporteinrichtung nach einem der vorhergehenden Ansprüche,
**dadurch gekennzeichnet,**
**daß** am Anfang oder Ende der Transportstrecke Mittel (z.B. 9) zum longitudinalen Zentrieren der Gesamtheit der Werkstückträger vorgesehen sind.

5. Transporteinrichtung nach Anspruch 4,
**dadurch gekennzeichnet,**
**daß** die Zentriermittel (z.B. 9) sowohl am Anfang als auch am Ende der Transportstrecke angeordnet sind.

## Claims

1. Linear conveyor for workpiece carriers (1) in a conveying route (e.g. 3), whereby at least one coil member (6) as primary member of a linear motor runs along the transport route and whereby magnet members (4) as secondary member of the linear motor are assigned to the workpiece carrier (1), **characterised in that** the workpiece carriers (1) have contact surfaces (7) on their front and rear sides for the respective adjacent workpiece carriers (1), that the longitudinal separation between the contact surfaces (7) on the front and rear sides is adjusted to a nominal amount within narrow tolerances, that the workpiece carriers (1) following one another in the transport direction lie directly against one another on their mutual contact surfaces (7), that the primary member is controllable as a whole, and that the division separations between sections (8) of the coil member (6) are matched in their length to the length separation between the contact surfaces (7).

2. Conveyor according to Claim 1, **characterised in that** the plate-shaped magnet members (4) standing out from the workpiece carriers (1) project into a magnetic gap (5) of the coil member (6).

3. Conveyor according to Claim 1 or 2, **characterised in that** the length of the magnet members (4) is approximately equal to the length of the workpiece carrier (1).

4. Conveyor according to one of the previous claims, **characterised in that** means (e.g. 9) are provided at the beginning or end of the transport route for longitudinal centring of the entirety of the workpiece carriers.

5. Conveyor according to Claim 4, **characterised in that** the centring means (e.g. 9) are arranged both at the beginning and at the end of the transport route.

## Revendications

1. Convoyeur linéaire pour des porte-pièces (1) dans un parcours de transport (par exemple 3), au moins une partie formant bobine (6) s'étendant le long du parcours de transport en tant que partie primaire d'un moteur linéaire, et des parties formant aimants (4) étant associées au porte-pièce (1) en tant que partie secondaire du moteur linéaire,
**caractérisé en ce que** les porte-pièces (1) présentent du côté avant et du côté arrière des surfaces de butée (7) pour les porte-pièces voisins respectifs (1),
**en ce que** la distance longitudinale entre les surfaces de butée (7) avant et arrière est ajustée à une cote nominale avec une étroite tolérance,
**en ce que** les porte-pièces (1) qui se succèdent dans la direction de transport sont directement juxtaposés par leurs surfaces de butée réciproques (7),
**en ce que** la partie primaire peut être asservie en tant que tout,
et **en ce que** la longueur des pas de division entre des sections (8) de la partie formant bobine (6) est adaptée à la distance longitudinale entre les surfaces de butée (7).

2. Convoyeur selon la revendication 1, **caractérisé en ce que** les parties formant aimants (4) faisant saillie des porte-pièces (1) à la manière de plaques pénètrent dans un entrefer (5) de la partie formant bobine (6).

3. Convoyeur selon la revendication 1 ou 2, **caractérisé en ce que** la longueur des parties formant aimants (4) est approximativement égale à la longueur des porte-pièces (1).

4. Convoyeur selon l'une des revendications précédentes, **caractérisé en ce que** des moyens (par exemple 9) sont prévus au début ou à la fin du parcours de transport pour le centrage longitudinal de l'ensemble des porte-pièces.

5. Convoyeur selon la revendication 4, **caractérisé en ce que** les moyens de centrage (par exemple 9) sont disposés tant au début qu'à la fin du parcours de transport.
